# EUROPÄISCHE PATENTSCHRIFT

(11) **EP 1 108 522 B1**
(45) Veröffentlichungstag und Bekanntmachung des Hinweises auf die Patenterteilung: **27.11.2002**
(21) Anmeldenummer: 00122932.7
(22) Anmeldetag: 21.10.2000
(51) Int. Cl.: B29C 49/78, B29C 49/42, B29C 49/48, B29C 49/04

(54) **Verfahren und Vorrichtung zum Verändern des Volumenstroms eines Sauggebläses**
Process and apparatus to modify the volume flow of a fan
Procede et dispositif pour modifier le débit volumique d'un ventilateur

(30) Priorität: 16.12.1999 DE 19960592
(43) Veröffentlichungstag der Anmeldung: 20.06.2001
(73) Patentinhaber: SIG Kautex GmbH & Co. KG, 53229 Bonn (DE)
(72) Erfinder: Küpper, Rudolf, 53819 Neunkirchen-Seelscheid (DE); Willach, Heinz-Hugo, 53797 Lohmar (DE); Müller, Hubert, 53809 Ruppichteroth (DE)
(74) Vertreter: Valentin, Ekkehard, Dipl.-Ing.

(56) Entgegenhaltungen:
- JP-A- 63 165 118
- PATENT ABSTRACTS OF JAPAN vol. 017, no. 106 (M-1375), 4. März 1993 (1993-03-04) & JP 04 296524 A (UBE IND LTD), 20. Oktober 1992 (1992-10-20)

## Beschreibung

Die Erfindung betrifft ein Verfahren und eine Vorrichtung zum Verändern des Volumenstroms eines Sauggebläses beim Herstellen von Saugblasartikeln in einer Saugblasmaschine, deren Werkzeughälften der schlauchartige Vorformling aus thermoplastischem Kunststoff von einem Extrusionskopf direkt oder unter Zwischenschaltung eines Schlauchzubringers zugeführt wird.

Beim Saugblasverfahren wird der Vorformlingsschlauch entweder unmittelbar aus dem Extrusions- bzw. Coextrusionskopf in das geschlossene Werkzeug extrudiert bzw. durch das geschlossene Blaswerkzeug gesaugt oder gemäß einer Weiterentwicklung unter Zwischenschaltung eines Schlauchzubringers zugeführt, wobei er beim Einlegen in das Werkzeug auf einem von der werkzeugunterseitig angeordneten Saugvorrichtung erzeugten Luftpolster in die Endposition gleitet (vgl. z.B. die Veröffentlichung "Technische Mitteilungen Krupp", 2/1998, Seiten 49/50).

Das Saugblasverfahren erfordert beim Einsaugen des unmittelbar in das Werkzeug extrudierten oder mittelbar zugeführten Vorformlingsschlauches eine Variation des Saugvolumenstroms in Abhängigkeit zur Geometrie des durch die Werkzeugkavitäten vorgegebenen Fertigartikels. So müssen z.B. starke Winkeländerungen relativ langsam durchlaufen werden, während gerade Strecken vom Vorformling sehr schnell durcheilt werden können. Der Volumenstrom muß dementsprechend während sehr kurzen Zeiten, da der gesamte Einsaugvorgang beispielsweise nicht mehr als 2 Sekunden in Anspruch nimmt, variiert werden. Hierzu ist es bekannt, elektrisch die Drehzahl des das Sauggebläse, z.B. ein Seitenkanalverdichter, antreibenden Motors zu verstellen. Da das Sauggebläse aber aufgrund der großen benötigten Volumenströme mit einem relativ großen Motor angetrieben wird, unterliegt dieser einer gewissen Trägheit, die nicht geeignet ist, die Drehzahl gewünscht schnell zu verändern.

Der Erfindung liegt daher die Aufgabe zugrunde, ein Verfahren und eine Vorrichtung der eingangs genannten Art zu schaffen, die in kürzester Zeit eine genaue Anpassung des Ansaug-Volumenstroms an sich ändernde Schlauchzuführ- bzw. Einlegegeschwindigkeiten ermöglichen.

Diese Aufgabe wird mit einem Verfahren erfindungsgemäß dadurch gelöst, daß der Volumenstrom abhängig von der Schlauchzuführgeschwindigkeit mit einem geregelten Stellorgan durch Variation des freien Luftdurchtrittquerschnitts im Saugkanal gesteuert wird. Im Gegensatz zur Drehzahlregelung läßt sich damit ein konstanter, genau variierter Saugvolumenstrom in gewünscht kurzer Zeit erreichen, da das von dem eigentlichen Antrieb des Sauggebläses unabhängige Stellorgan ohne nachteilige Trägheitseinflüsse ausreichend schnell reagieren kann.

Eine Ausgestaltung der Erfindung sieht vor, daß der Volumenstrom im Zusammenspiel mit einem druckbegrenzten Bypass-Luftstrom geregelt wird. Dem Sauggebläse wird es hierdurch ermöglicht, druckbegrenzt bedarfsweise zusätzlich Luft zu ziehen, für den Fall, daß der Durchtrittsquerschnitt zu sehr geschlossen sein sollte. Damit liegt es im Rahmen der technischen Anwendung, umgekehrt den Bypass-Luftstrom in Abhängigkeit des im Saugkanal freien Durchtrittsquerschnitts zu variieren.

Bei einer Vorrichtung zum Durchführen des Verfahrens wird erfindungsgemäß vorgeschlagen, daß der Saugkanal des Sauggebläses mit einem geregelten, eine Drosselklappe und ein diese beaufschlagendes Stellorgan aufweisenden Drosselsystem versehen ist. Die Steuerung der Sauggeschwindigkeit bzw. des Saugvolumenstroms läßt sich somit in einfacher Weise durch Verstellung der vorzugsweise als Drehschieber ausgebildeten und mit einem Servomotor als Stellorgan beaufschlagten Drosselklappe erreichen.

Vorteilhafte Ausgestaltungen der Erfindungen sehen vor, daß an die Drosselklappe regelungstechnisch ein Bypass angeschlossen und dieser vorzugsweise mit einem Druckbegrenzungsventil versehen ist. Damit wird erreicht, daß bei übermäßig geschlossener Drosselklappe das Sauggebläse druckbegrenzt zusätzlich Luft ziehen kann bzw. der Bypasszustrom in Abhängigkeit der Stellung des Drehschiebers bzw. der Drosselklappe variiert werden kann.

Weiterhin wird vorgeschlagen, daß der Luftaustrittskanal des Sauggebläses mit einem Schalldämpfer versehen ist. Dies trägt zur Verminderung der Lärmbelästigung beim Betrieb des Sauggebläses bei.

Weitere Einzelheiten und Vorteile der Erfindung ergeben sich aus den Ansprüchen und der nachfolgenden Beschreibung eines in den Zeichnungen dargestellten Ausführungsbeispiels der Erfindung. Es zeigen:
- Fig. 1: als Einzelheit einer Saugblas-Formmaschine ein geöffnetes Werkzeug mit darüber angeordnetem Extrusions- bzw. Coextrusionskopf mit mittelbarer Zuführung des Vorformlingsschlauches in das Werkzeug durch einen bereitstehenden Sclauchzubringer, im Betriebsablauf vor der Entnahme des fertigen Artikels aus dem geöffneten Werkzeug dargestellt;
- Fig. 2: als Einzelheit des in Fig. 1 schematisch gezeigten Saugblas-Werkzeugs in der Vorderansicht ein dem Werkzeug zugeordnetes Sauggebläse;
- Fig. 3: das Sauggebläse nach Fig. 2 in der Seitenansicht von links gesehen; und
- Fig. 4: im Teilschnitt die in Fig. 2 strichpunktiert eingerahmte Einzelheit "Z".

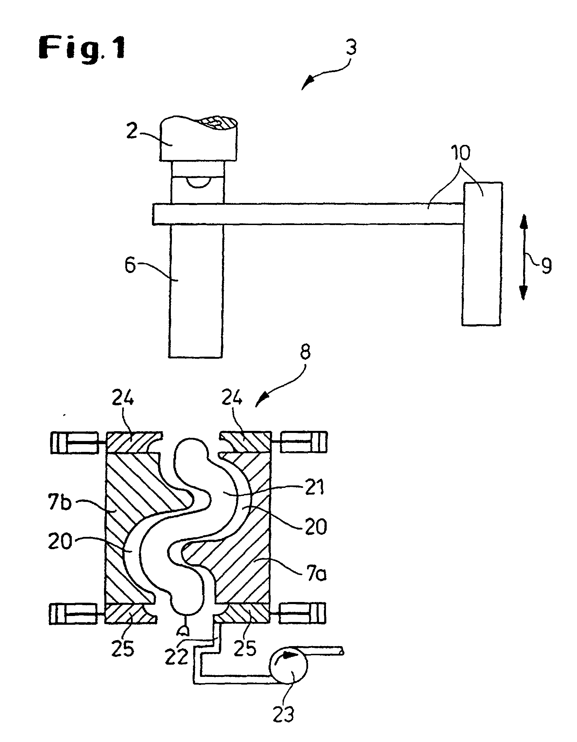

Eine in ihrer Gesamtheit in Fig. 1 nicht dargestellte, als solche bekannte Saugblas-Formmaschine 3 umfaßt einen Extrusions- bzw. Coextrusionskopf, dem das zur Herstellung des sauggeblasenen Hohlkörpers benötigte aufbereitete Kunststoff-Material bekanntermaßen über einen Extruder und einen sich diesem anschließenden Verteiler zugeleitet wird. Der Extrusionskopf 2 gibt die für das Saugblasverfahren benötigten Vorformlinge als Schlauchabschnitte 6 in ein aus zwei Formhälften 7a, 7b bestehendes Werkzeug 8 ab, das zur Aufnahme des Vorformlingsschauchs 6 mit einer Artikelkavität 20 ausgebildet ist. Das Abnehmen des Vorformlingsschlauches 6 aus dem Extrusionskopf 2 und Zuführen in das Werkzeug 8 geschieht im Ausführungsbeispiel mittels eines gemäß dem Doppelpfeil 9 heb- und senkbaren Schlauchzubringers 10. Dieser kann, wenn die Vorformlingsschläuche 6 nicht abgerissen werden sollen, Mittel zum Schneiden, Verschweißen sowie auch zum Vorblasen der Vorformlingsschläuche 6 aufweisen. Die Formhälften 7a, 7b des Werkzeugs 8 sind in einer von Schließzylindern beaufschlagbaren, nicht gezeigten Schließeinheit angeordnet.

Die Fig. 1 gibt die Betriebsposition nach dem Saugblasen wieder, in der die Werkzeuge 7a, 7b des Formwerkzeugs 8 zur Entnahme des fertigen Artikels 21 geöffnet sind. Für einen neuerlichen Saugblasvorgang wird - nach dem Schließen des Werkzeugs 8 - eine von unterhalb mittels eines Adapters 22 an das Werkzeug 8 angeschlossene Saugvorrichtung 23 eingeschaltet. Das damit beginnende Ansaugen eines neu zugeführten Vorformlingsschlauches 6 wird durch eine entsprechend darauf abgestimmte Zuführung des Vorformlings mit einem Greifer unterstützt. Sobald die im Ausführungsbeispiel an der Ober- und der Unterseite des Werkzeuges 8 angeordneten Schieber 24 bzw. 25 zum Verschließen der Artikelkavität zugefahren werden, wird die Vorblasluft ausgeschaltet und das Ausformen des Vorformlingsschlauches 6 zu dem fertigen Artikel 21 mittels Blasluft über Blasnadeln oder Blasdome der Saugvorrichtung 23 bewirkt. Wenn der Fertigartikel 21 ausgeformt und abgekühlt ist, werden die Formhälften 7a, 7b wie gemäß der Darstellung in Fig. 1 geöffnet, so daß der Fertigartikel 21 zur Entnahme, beispielsweise mittels eines Entnahmegreifers oder einer Maske, freiliegt. Von da kann der Fertigartikel 21 in Nachfolgestationen, z.B. zum Stanzen und zum Nachkühlen, weitertransportiert werden.

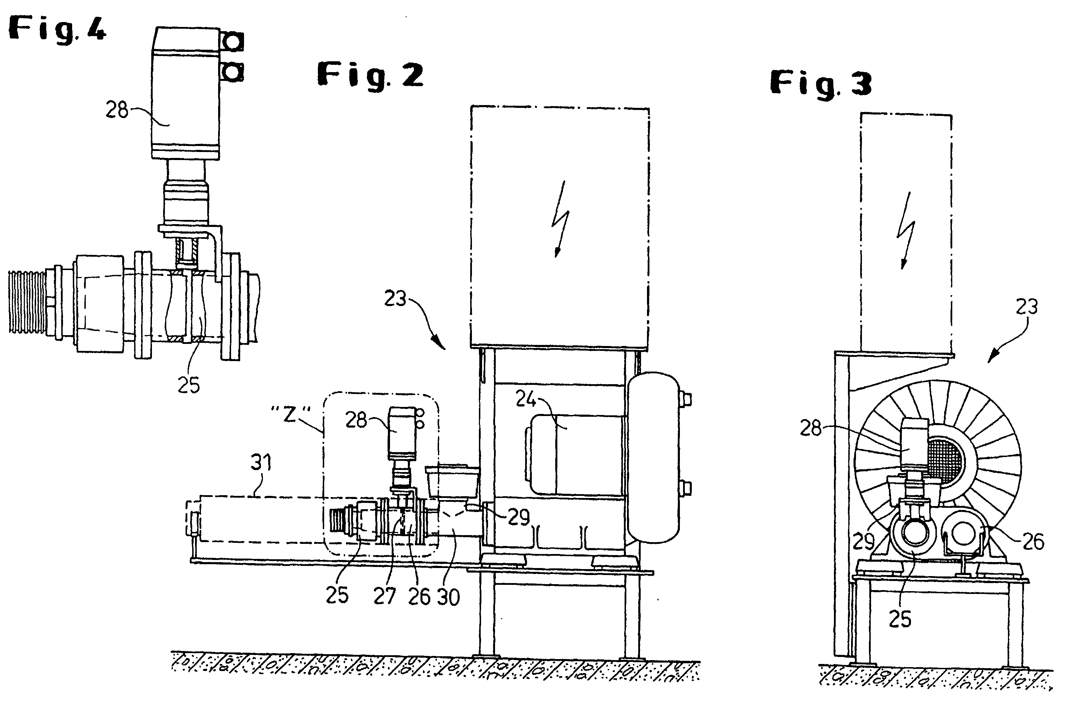

Das in den Fig. 2 und 3 näher gezeigte Sauggebläse 23 in Form eines üblichen Seitenkanalverdichters wird von einem Motor 24 angetrieben. Es besitzt einen Saugkanal 25 und einen Luftaustrittskanal 26 (vgl. Fig. 3). Zum schnellen Anpassen an die unterschiedlichen Geschwindigkeiten beim Einlegen des Vorformlingsschlauches 6 in die Artikelkavität 20 (vgl. Fig. 1) ist im Saugkanal 25 eine als Drehschieber ausgebildete Drosselklappe 27 angeordnet (vgl. Fig. 4). Dieser ist als Stellorgan 28 ein Servomotor zugeordnet. Dieses ist über eine übergeordnete, nicht dargestellte Steuerung mit dem den Vorformlingsschlauch 6 in die Artikelkavität 20 des Werkzeugs 8 einlegenden Schlauchzubringer 10 oder dergleichen verbunden. Je nach Vorgabe der Geschwindigkeit der Schlauchzuführung wird der Durchtrittsquerschnitt im Saugkanal 25 durch Verstellen der Drosselklappe 27 mittels des Stellorgans 28 mehr oder weniger geschlossen bzw. geöffnet.

Die Möglichkeiten der Variationen werden weiter noch dadurch erhöht, daß an die Drosselklappe 27 des Saugkanals 25 ein Bypass 29 mit einem Druckbegrenzungsventil 30 (vgl. Fig. 2) für die saugseitige Drosselung angeordnet ist. Zur Geräuschverringerung beim Betrieb des Sauggebläses 23 läßt sich auf dem Luftaustrittskanal 26 ein in Fig. 2 gestrichelt angedeuteter Schalldämpfer 31 vorsehen.

## Patentansprüche

1. Verfahren zum Verändern des Volumenstroms eines Sauggebläses beim Herstellen von Saugblasartikeln in einer Saugblasmaschine, deren Werkzeughälften der schlauchartige Vorformling aus thermoplastischem Kunststoff von einem Extrusionskopf direkt oder unter Zwischenschaltung eines Schlauchzubringers zugeführt wird,
**dadurch gekennzeichnet,**
**daß** der Volumenstrom abhängig von der Schlauchzuführgeschwindigkeit mit einem geregelten Stellorgan durch Variation des freien Luftdurchtrittquerschnitts im Saugkanal gesteuert wird.

2. Verfahren nach Anspruch 1,
**dadurch gekennzeichnet,**
**daß** der Volumenstrom im Zusammenspiel mit einem druckbegrenzten Bypass-Luftstrom geregelt wird.

3. Vorrichtung zum Verändern des Volumenstroms eines Sauggebläses beim Herstellen von Saugblasartikeln in einer Saugblasmaschine, deren Werkzeughälften der schlauchartige Vorformling aus thermoplastischem Kunststoff von einem Extrusionskopf direkt oder unter Zwischenschaltung eines Schlauchzubringers zugeführt wird,
**dadurch gekennzeichnet,**
**daß** der Saugkanal (25) des Sauggebläses (23) mit einem geregelten, eine Drosselklappe (27) und ein diese beaufschlagendes Stellorgan (28) aufweisenden Drosselsystem versehen ist.

4. Vorrichtung nach Anspruch 3,
**dadurch gekennzeichnet,**
**daß** die Drosselklappe (27) als Drehschieber ausgebildet und als Stellorgan (28) ein Servomotor eingesetzt ist.

5. Vorrichtung nach Anspruch 3 oder 4,
**dadurch gekennzeichnet,**
**daß** an die Drosselklappe (27) regelungstechnisch ein Bypass (29) angeschlossen ist.

6. Vorrichtung nach Anspruch 5,
**dadurch gekennzeichnet,**
**daß** der Bypass (29) ein Druckbegrenzungsventil (30) aufweist.

7. Vorrichtung nach einem der Ansprüche 3 bis 6,
**dadurch gekennzeichnet,**
**daß** der Luftaustrittskanal (26) des Sauggebläses (23) mit einem Schalldämpfer (31) versehen ist.

## Claims

1. A method for varying the volume flow of a suction fan in the manufacture of blow-moulded articles in a suction-type blow moulding machine, wherein the tubular preform of thermoplastic plastic material is fed from an exclusion die to the tool halves of the suction-type blow moulding machine either directly or by means of an intermediately arranged tube feeder,
**characterized by** the fact
that the volume flow is controlled in dependence on the tube feeding speed by means of a controlled actuator for varying the free air passage cross section in the suction channel.

2. The method according to Claim 1,
**characterized by** the fact that
the volume flow is controlled together with a bypass air current of limited pressure.

3. A device for varying the volume flow of a suction fan in the manufacture of blow-moulded articles in a suction-type blow moulding machine, wherein the tubular preform of thermoplastic plastic material is fed from an exclusion die to the tool halves of the suction-type blow moulding machine either directly or by means of an intermediately arranged tube feeder,
**characterized by** the fact
that the suction channel (25) of the suction fan (23) is provided with a controlled throttle system that contains a throttle valve (27) and an actuator (28) that acts upon the throttle valve.

4. The device according to Claim 3,
**characterized by** the fact
that the throttle valve (27) is realized in the form of a rotary slide valve, and by the fact that a servomotor is used as the actuator (28).

5. The device according to Claim 3 or 4,
**characterized by** the fact
that a bypass (29) is connected to the throttle valve (27) for control purposes.

6. The device according to Claim 5,
**characterized by** the fact
that the bypass (29) contains a pressure control valve (30).

7. The device according to one of Claims 3-6,
**characterized by** the fact
that the air outlet channel (26) of the suction fan (23) is provided with a silencer (31).

## Revendications

1. Procédé pour la modification du flux volumétrique d'une soufflerie à aspiration lors de la fabrication d'articles soufflés par aspiration dans une machine de soufflage par aspiration vers les moitiés d'outillage de laquelle l'ébauche de forme tubulaire en matière thermoplastique est acheminée d'une tête d'extrusion directement ou par l'intermédiaire d'un convoyeur de tubes,
**caractérisé en ce que**
le flux volumétrique est commandé en fonction de la vitesse d'acheminement du tube grâce à un organe de réglage régulé par variation de la section transversale libre de passage d'air dans le canal d'aspiration.

2. Procédé selon la revendication 1,
**caractérisé en ce que**
le flux volumétrique est régulé conjointement avec un flux d'air à dérivation de pression limitée.

3. Procédé pour la modification du flux volumétrique d'une soufflerie à aspiration lors de la fabrication d'articles soufflés par aspiration dans une machine de soufflage par aspiration vers les moitiés d'outillage de laquelle l'ébauche de forme tubulaire en matière thermoplastique est acheminée d'une tête d'extrusion directement ou par l'intermédiaire d'un convoyeur de tubes,
**caractérisé en ce que**
le canal d'aspiration (25) de la soufflerie à aspiration (23) est muni d'un système d'étranglement présentant une vanne à étranglement (27) et un organe de réglage (28) sollicitant celle-ci.

4. Dispositif selon la revendication 3,
**caractérisé en ce que**
la vanne à étranglement (27) est configurée comme un tiroir rotatif et qu'un servomoteur est utilisé comme organe de réglage (28).

5. Dispositif selon la revendication 3 ou 4,
**caractérisé en ce que**
une dérivation (29) est raccordée au niveau de la technique de régulation à la vanne à étranglement (27).

6. Dispositif selon la revendication 5,
**caractérisé en ce que**
la dérivation (29) présente une soupape de limitation de pression (30).

7. Dispositif selon une des revendications 3 à 6,
**caractérisé en ce que**
le canal de sortie d'air (26) de la soufflerie à aspiration (23) est muni d'un amortisseur de son (31).
